Europäisches Patentamt

European Patent Office

Office européen des brevets

(11) Veröffentlichungsnummer: **0 258 854 B1**

(12) **EUROPÄISCHE PATENTSCHRIFT**

(45) Veröffentlichungstag der Patentschrift: **13.03.91**

(51) Int. Cl.5: **C08F 6/00, C08F 26/10**

(21) Anmeldenummer: **87112626.4**

(22) Anmeldetag: **29.08.87**

(54) Verwendung eines Adsorptionmittels zum Entfernen von Vinylpyrrolidon aus Vinylpyrrolidon-Polymerisat-Lösungen.

(30) Priorität: **03.09.86 DE 3629933**

(43) Veröffentlichungstag der Anmeldung:
**09.03.88 Patentblatt 88/10**

(45) Bekanntmachung des Hinweises auf die
Patenterteilung:
**13.03.91 Patentblatt 91/11**

(84) Benannte Vertragsstaaten:
**AT BE CH DE ES FR GB GR IT LI NL SE**

(56) Entgegenhaltungen:
**EP-A- 0 000 161**
**EP-A- 0 215 379**
**CH-A- 468 832**
**DE-A- 1 645 642**

**CHEMICAL ABSTRACTS, Band 96, Nr. 2, 11.**
**Januar 1982, Zusammenfassung Nr. 7529v,**
**Columbus, Ohio, US; & JP-A-56 110 704**

(73) Patentinhaber: **BASF Aktiengesellschaft**
**Carl-Bosch-Strasse 38**
**W-6700 Ludwigshafen(DE)**

(72) Erfinder: **Nuber, Adolf, Dr.**
**Kurt Schumacher-Str. 11**
**W-6737 Boehl-Iggelheim(DE)**
Erfinder: **Sanner, Axel, Dr.**
**Lorscher Ring 2c**
**W-6710 Frankenthal(DE)**
Erfinder: **Urban, Dieter, Dr.**
**Espenstr. 15**
**W-6800 Mannheim 1(DE)**

## Beschreibung

Die Erfindung betrifft die Verwendung eines Adsorptionsmittels zum Entfernen von Vinylpyrrolidon (VP) aus einer wäßrigen oder alkoholischen Lösung eines Homo- oder Copolymerisates des VP.

Polymere sollen - vor allem aus toxikologischen und ästhetischen Gründen (Geruch) - prinzipiell möglichst monomerfrei sein. Dies gilt insbesondere bei Polymeren für kosmetische und vor allem für pharmazeutische Anwendungen.

Die bisher bekannten Methoden zur Herabsetzung des Monomergehaltes in VP-Polymerisaten konzentrieren sich auf die Nachpolymerisation nach der Beendigung der Hauptpolymerisation durch nachträglichen Zusatz von Startern und/oder Erhöhung der Temperatur (US-A 2 665 271 und US-A 4 182 851). Andere Methoden sind für VP-Polymerisate bisher nicht bekannt. Die Methode bedingt einen erhöhten Gehalt des Polymeren an Folgeprodukten des Starters. Außerdem kommt es bei erhöhter Temperatur leicht zu Verfärbungen.

Der Erfindung lag die Aufgabe zugrunde, ein Verfahren zur Gewinnung eines möglichst monomerarmen VP-Polymerisates zu finden, das die genannten Nachteile vermeidet.

Die Erfindung besteht in der Verwendung eines Adsorptionsmittels zum Entfernen von VP aus einer wäßrigen oder alkoholischen Lösung eines VP-Polymerisates.

VP-Polymerisate sind Homo- und Copolymerisate des VP, die mindestens 20, vorzugsweise mindestens 30 Gew.% VP einpolymerisiert enthalten. Sie können nach beliebigen Methoden in Wasser und/oder organischen Lösungsmitteln hergestellt sein. Der K-Wert nach Fikentscher (Cellulose-Chemie, 13, 1932, Seiten 58 bis 64 und 71 bis 74) soll im Bereich von 10 bis 100 liegen.

Als Comonomere kommen alle üblichen in Betracht, beispielsweise Vinylester mit Carbonsäuren mit 1 bis 4 Kohlenstoffatomen, wie Vinylacetat oder Vinylpropionat; Vinylether; Acrylate und Methacrylate mit Alkoholen mit 1 bis 8 Kohlenstoffatomen, wie Methylmethacrylat oder 2-Ethylhexylacrylat, wobei der Alkohol noch freie Hydroxylgruppen tragen kann, beispielsweise Hydroxypropylacrylat; ferner Acrylsäure und Methacrylsäure. Selbstverständlich ist die Copolymerisation nicht auf ein Comonomeres beschränkt, vielmehr können auch zwei oder mehr Comonomere einpolymerisiert werden.

Das Polymerisat kann bei der Behandlung mit dem Adsorptionsmittel in wäßriger, wäßrig/alkoholischer oder alkoholischer Lösung vorliegen. Als Alkohole kommen die mit 1 bis 4 Kohlenstoffatomen in Betracht. Bevorzugt wird Wasser.

Als Adsorptionsmittel sind besonders geeignet Aktivkohle, Zeolithe und vor allem saure Ionenaustauscher. Es gibt verschiedene Aktivkohlen (Ullmann Encyklopädie der techn. Chemie, 4. Auflage, Verlag Urban und Schwarzenberg, München-Berlin, 1977, Band 14, 620 bis 633), Zeolithe (Ullmann, 4. Auflage, Band 24, 575 bis 578) und Ionenaustauscher (Ullmann, 4. Auflage, Band 13, 279 bis 346). Sie sind im Prinzip alle geeignet. Stark saure (also Sulfonsäuregruppen enthaltende) Ionenaustauscher (Ullmann, Band 13, 297 bis 298) werden bevorzugt, und unter diesen insbesondere die makroporösen (Porenweite 10 nm und mehr; Ullmann, 4. Auflage, Band 13, 296). Das Adsorptionsmittel kann als Festbett oder in kleinteiliger Form in der Lösung suspendiert eingesetzt werden. Die Mindestkontaktzeit liegt in der Größenordnung von 1 Minute. In der Regel lagen die Kontaktzeiten bei unseren Versuchen bei 4 Minuten bis 15 Stunden. Die Temperatur während des Kontaktes kann in weiten Grenzen variieren, bevorzugt werden 10 bis 90° C.

Die Menge an Adsorptionsmittel ist zweckmäßig so zu bemessen, daß entweder die VP-Extraktion für den gewünschten Zweck ausreicht oder eine Erhöhung der Menge keinen nennenswerten zusätzlichen Effekt bringt. Sie hängt stark von der Art des Adsorptionsmittels ab und ist jeweils durch einfache Versuche zu ermitteln. Sie liegt für Aktivkohle in der Größenordnung von 1 bis 20, für Zeolithe von 3 bis 25 und für saure Ionenaustauscher von 0,1 bis 15 Gew.%, jeweils bezogen auf Polymerisat. Man kommt damit auf VP-Restgehalte im Bereich von 250 bis unter 10 ppm, bezogen auf das Polymerisat.

Die Konzentration der zu behandelnden Lösung ist nach oben durch die Viskosität beschränkt. Diese wiederum hängt vom Molekulargewicht ab. Beispielsweise kann die Konzentration bei einem K-Wert um 30 im Bereich von 20 bis 40 Gew.% liegen.

Auf den pH-Wert der Polymerisatlösung vor der Behandlung mit dem Adsorptionsmittel kommt es nicht an, man läßt ihn zweckmäßig wie er von der Polymerisation her ist (etwa 4 bis 9). Wenn die Polymerlösung frei von Salzen und Basen ist, verändert sich der pH-Wert bei der Behandlung mit den Adsorptionsmitteln, auch den sauren Ionenaustauschern, nicht wesentlich. Bei salz- und/oder säurehaltigen Polymerlösungen erhält man nach der Behandlung mit sauren Ionenaustauschern saure Lösungen. Man kann diese durch Zusatz von Basen neutralisieren, vorzugsweise durch Behandlung mit einem basischen Ionenaustauscher, um eine Salzbeladung der Lösung zu vermeiden.

Das erfindungsgemäße Verfahren ist überraschend, denn es war zu erwarten, daß Adsorptionsmittel aus einem Gemisch von großen und kleinen Molekülen (hoch- und niedermolekularen Verbindungen) bevorzugt die großen binden würden. Daß aber auf diese Weise die niedermolekularen Anteile herausgeholt werden können, war nicht vorauszusehen.

Die in den Beispielen genannten Teile und Prozente beziehen sich auf das Gewicht. Die Restmonomerengehalte beziehen sich auf Polymeres.

Beispiel 1

Über eine handelsübliche Ionenaustauschersäule, die mit einem regenerierten, makroporösen, stark sauren Ionenaustauscher (®Lewatit SPC 118) gefüllt ist, leitete man eine 30 %ige wäßrige Lösung von Polyvinylpyrrolidon (K-Wert 30,1, gemessen 1 %ig in Wasser bei 25°C) mit einer Geschwindigkeit von 4 Bettvolumina pro Stunde. Der Vinylpyrrolidon-Gehalt wurde durch diesen Prozeß von 980 ppm auf 20 ppm abgesenkt.

Beispiel 2

Eine Lösung von 100 Teilen Polyvinylpyrrolidon (K-Wert 31,4, gemessen 1 %ig in Wasser bei 25°C) in 300 Teilen Wasser (pH-Wert der Lösung 7,2) wurde mit 10 Teilen Aktivkohle (weitporig, mittlerer Porendurchmesser 0,8 bis 3 nm) versetzt und 4 h bei 25°C gerührt, anschließend das Absorptionsmittel wieder abgetrennt.

Der Restmonomerengehalt an Vinylpyrrolidon nahm von ursprünglich 600 ppm auf 28 ppm ab.

Beispiel 3

Über eine handelsübliche Ionenaustauschersäule, die mit einem regenerierten, makroporösen, stark sauren Ionenaustauscher (Lewatit® SPC 118) gefüllt war, leitete man bei 50°C eine 35 %ige wäßrige Lösung eines Copolymeren aus 60 Teilen Vinylpyrrolidon und 40 Teilen Vinylacetat (K-Wert 28,3, gemessen 1 %ig in Ethanol bei 25°C) mit einer Geschwindigkeit von 7 Bettvolumina pro Stunde.

Sowohl die unbehandelte als auch die wie oben beschrieben behandelte Lösung wurde sprühgetrocknet. Der VP-Gehalt des unbehandelten Copolymeren betrug 1020 ppm, der des behandelten war kleiner als 10 ppm.

Beispiel 4

Über eine handelsübliche Ionenaustauschersäule, die mit einem regenerierten, makroporösen, stark sauren Ionenaustauscher (Lewatit SPC® 118) gefüllt war, floß eine 25 %ige isopropanolische Lösung eines Copolymeren aus 30 Teilen Vinylpyrrolidon und 70 Teilen Vinylacetat (K-Wert 25,3, gemessen 1 %ig in Ethanol bei 25°C) mit einer Geschwindigkeit von 10 Bettvolumina pro Stunde.

Der VP-Gehalt der Ausgangslösung betrug 590 ppm, der der behandelten Lösung 20 ppm.

Beispiel 5

5 Teile Aktivkohle (für Gaschromatographie, mittlerer Porendurchmesser 0,5 bis 1,5 nm) wurden in 500 Teilen einer 20 %igen wäßrigen Lösung von Polyvinylpyrrolidon (K-Wert 35,5, gemessen 1 %ig in Wasser bei 25°C) suspendiert. Diese Suspension wurde 6 h bei 25°C gerührt, anschließend das Absorptionsmittel wieder abgetrennt. Der VP-Gehalt wurde durch diesen Prozeß von ursprünglich 300 ppm auf 23 ppm abgesenkt.

Beispiel 6

Eine Lösung von 100 Teilen Polyvinylpyrrolidon (K-Wert 23,9, gemessen 1 %ig in Wasser bei 25°C) in 300 Teilen Wasser (pH-Wert der Lösung 5) wurde mit 15 Teilen Molekularsieb 1 nm versetzt. Diese Suspension wurde 5 h bei 25°C gerührt, anschließend das Molekularsieb wieder abgetrennt. Sowohl die unbehandelte als auch die wie oben beschrieben behandelte Lösung wurde sprühgetrocknet. Der VP-Gehalt des unbehandelten Polymeren betrug 530 ppm, der des behandelten 240 ppm.

Beispiel 7

3 Teile eines regenerierten, makroporösen, schwach sauren Ionenaustauschers (Lewatit CNP® 80) wurden in 300 Teilen einer 30 %igen wäßrigen Lösung von Polyvinylpyrrolidon (K-Wert 28,6, gemessen 1 %ig in Wasser bei 25°C) suspendiert. Dieses Gemisch wurde nun 2 h bei 50°C gerührt, anschließend der Ionenaustauscher abgetrennt. Durch diese Behandlung der Polymerisatlösung nahm der VP-Gehalt von ursprünglich 330 ppm auf 90 ppm ab.

Beispiel 8

Über eine handelsübliche Ionenaustauschersäule, die mit einem regenerierten, stark sauren Ionenaustauscher (Lewatit S 100) gefüllt war, floß eine 25 %ige wäßrige Lösung von Polyvinylpyrrolidon (K-Wert 31,4, gemessen 1 %ig in Wasser bei 25° C) mit einer Geschwindigkeit von 3 Bettvolumina pro Stunde.

Die Polymerisatlösung wurde sprühgetrocknet. Der VP-Gehalt nahm von ursprünglich 600 ppm auf 39 ppm ab.

**Ansprüche**

1. Verwendung eines Adsorptionsmittels zum Entfernen von Vinylpyrrolidon aus wäßrigen oder alkoholischen Lösungen von Vinylpyrrolidon-Polymerisaten.

2. Verwendung von Aktivkohle gemäß Anspruch 1.

3. Verwendung von Zeolithen gemäß Anspruch 1.

4. Verwendung eines sauren Ionenaustauschers gemäß Anspruch 1.

**Claims**

1. Use of an adsorbent for removing vinylpyrrolidone from aqueous or alcoholic solutions of vinylpyrrolidone Polymers.

2. Use of active carbon as claimed in claim 1.

3. Use of a zeolite as claimed in claim 1.

4. Use of an acidic ion exchanger as claimed in claim 1.

**Revendications**

1. Utilisation d'un agent adsorbant pour l'élimination de la vinylpyrrolidone contenue dans des solutions aqueuses ou alcooliques de polymères de la vinylpyrrolidone.

2. Utilisation d'un charbon actif selon la revendication 1.

3. Utilisation de zéolithes selon la revendication 1.

4. Utilisation d'un échangeur d'ions acide selon la revendication 1.